# EUROPÄISCHE PATENTSCHRIFT

(11) **EP 3 732 054 B1**
(45) Veröffentlichungstag und Bekanntmachung des Hinweises auf die Patenterteilung: **30.08.2023**
(21) Anmeldenummer: 19717260.4
(22) Anmeldetag: 05.04.2019
(51) Int. Cl.: B41M 5/24, B41M 5/26, C03C 23/00, C23C 14/28, C03C 17/32, C03C 17/34, C03C 17/36, C03C 17/38

(54) **VERFAHREN ZUM MARKIEREN VON GLASTAFELN, VORZUGSWEISE VON EINSCHEIBEN-SICHERHEITSGLASTAFELN**
METHOD FOR MARKING GLASS PANELS, PREFERABLY SINGLE-PANE SAFETY GLASS PANELS
PROCÉDÉ DE MARQUAGE DE PLAQUES DE VERRE, DE PRÉFÉRENCE DE PLAQUES DE VERRE DE SÉCURITÉ TREMPÉ

(30) Priorität: 08.05.2018 DE 102018207181
(43) Veröffentlichungstag der Anmeldung: 04.11.2020
(60) Teilanmeldung: 23187829.9
(73) Patentinhaber: HEGLA boraident GmbH & Co. KG, 37688 Beverungen (DE)
(72) Erfinder: RAINER, Thomas, 38855 Wernigerode (DE)
(74) Vertreter: Dr. Solf & Zapf Patent- und Rechtsanwalts PartG mbB
(86) Internationale Anmeldenummer: PCT/EP2019/058725
(87) Internationale Veröffentlichungsnummer: WO 2019/214884

(56) Entgegenhaltungen:
- EP-A1- 3 031 785
- DE-A1- 10 258 522
- DE-A1-102005 026 038
- US-A1- 2003 039 765

## Beschreibung

Die vorliegende Erfindung betrifft ein Verfahren zum Markieren von Glastafeln, vorzugsweise von Einscheiben-Sicherheitsglastafeln.

Als Flachglas wird jedes Glas in Form von Scheiben bzw. Tafeln bezeichnet, unabhängig vom angewandten Herstellungsverfahren. Um Flachglastafeln mit Filter-, Spiegel-, Heizfunktionen oder sonstigen Funktionen zu versehen, werden die unterschiedlichsten, ein- oder mehrlagigen Funktionsbeschichtungen auf die Flachglastafeln aufgebracht. Die Funktionen können dabei z.B. Wärmeschutz, Sonnenschutz, oder Beheizung sein. Bei Low-E-Glas (Low-E = Low-Emissivity = niedrige Wärmeabstrahlung) reduzieren eine oder mehrere Metallschichten den Emissionsgrad der Glastafeln und dienen als Wärme- und/oder Sonnenschutzschicht.

In der Regel ist die funktionelle Beschichtung bzw. Funktionsbeschichtung eine einzelne Funktionsschicht oder ein Schichtaufbau mit mehreren Funktionsschichten mit einer Gesamtdicke < 2 µm. Der Schichtaufbau wird in der Regel durch Abscheidevorgänge, vorzugsweise Sputtern, erhalten.

Bei den einzelnen Funktionsschichten handelt es sich somit in der Regel um metallische und/oder keramische Schichten. Beispielsweise handelt es sich um metallische Niedrigemissionsschichten oder elektrische Heizschichten. Zwischen den einzelnen metallischen Funktionsschichten einer Funktionsbeschichtung können eine oder mehrere dielektrische (Funktions)schichten, z.B. aus einem Oxid, wie Aluminiumoxid, angeordnet sein. Zudem ist zwischen der Funktionsbeschichtung und der Glasoberfläche in der Regel eine Haftvermittlungsschicht aus Zinnoxid vorhanden.

Des Weiteren gibt es seit einiger Zeit Glasarten, bei denen die Funktionsbeschichtung oder auch nur die unbeschichtete Glasoberfläche (bei Glastafeln ohne Funktionsbeschichtung) durch eine abziehbare Schutzfolie (TPF= temporary protective film) oder eine Polymerschutzschicht (z. B. EasyPro^{®} von St. Gobain) geschützt ist, um diese vor eventuellen mechanischen Beschädigungen zu bewahren. Die Polymerschutzschicht ist z.B. durch Aufspritzen aufgebracht und nicht abziehbar, sondern mit der jeweiligen Oberfläche fest verbunden. Sie verbrennt allerdings während des Temperns im Ofen problemlos und rückstandsfrei. Die Schutzbeschichtung wird somit im Gegensatz zur Funktionsbeschichtung vor dem bestimmungsgemäßen Gebrauch der Glastafel entfernt.

Einscheiben-Sicherheitsglas (ESG) besteht aus einer einzigen, speziell wärmebehandelten Glasscheibe. Die Glasscheibe wird auf Temperaturen oberhalb ihrer Transformationstemperatur erhitzt und danach schlagartig wieder abgekühlt, so dass eine Vorspannung in der Glasscheibe entsteht. Vorzugsweise erfolgt die Wärmebehandlung gemäß DIN EN 12150-1:2015-12. Einscheiben-Sicherheitsglas hat aufgrund der Vorspannung eine erhöhte Stoß- und Schlagfestigkeit im Vergleich zu normalen Flachglastafeln.

Einscheiben-Sicherheitsglas unterliegt zumindest in Deutschland einer gesetzlichen Kennzeichnungspflicht. Heutzutage erfolgt die Kennzeichnung dabei entweder mit keramischer Farbe im Handsiebdruckverfahren oder mittels eines Abziehbildes. Die Kennzeichnung wird vor der Wärmebehandlung im Ofen aufgebracht und beim Vorspannen des Glases in das Glas eingebrannt. Die keramische Farbe benötigt die Ofentemperatur, um sich beständig mit der Oberfläche zu verbinden.

Beim Vorhandensein der zusätzlichen Polymerschutzschicht wird die Kennzeichnung bei den bekannten Verfahren auf die Polymerschutzschicht aufgebracht. Dies führt dazu, dass die Kennzeichnung mit der Polymerschutzschicht entfernt wird. Die Kennzeichnung verschwindet somit bei der Wärmebehandlung im Ofen.

Aus diesem Grund genügen Einscheiben-Sicherheitsglastafeln mit Polymerschutzschicht derzeit nicht der gesetzlichen Kennzeichnungspflicht, wenn sie mit Handsiebdruck oder Abziehbild gekennzeichnet wurden.

Im Falle der Schutzfolie wird diese vor dem Ofenprozess entfernt und dann die Kennzeichnung auf die Funktionsschicht mit Siebdruck oder Abziehbild aufgebracht.

Des Weiteren sind aus den beiden Druckschriften DE 10 2005 026 038 A1 und DE 10 2005 025 982 A1 Lasermarkierungsverfahren zur Markierung von Glastafeln ohne Schutzschichten bekannt.

Gemäß der DE 10 2005 026 038 A1 wird mittels Laser eine glasartige Schicht mit Metall-Nanopartikeln auf die Oberfläche der Glastafel aufgebracht. Dazu wird ein Spender- bzw. Trägermedium in Kontakt mit der zu beschriftenden Glastafeloberfläche gebracht und durch laserstrahlinduzierte Prozesse eine Markierung auf der Glastafeloberfläche erzeugt. Das Trägermedium weist z.B. eine PET-Folie auf, die z.B. eine Low-E-Funktionsbeschichtung aufweist, wobei diese mindestens eine metallische Funktionsschicht aufweist. Zur Markierung wird ein Laserstrahl auf die Funktionsbeschichtung gerichtet und aufgrund der Laserstrahleinstrahlung Material aus der Funktionsbeschichtung von der PET-Trägerfolie auf die zu markierende Glastafeloberfläche übertragen. Das Material haftet auf der Glastafeloberfläche als glasartige Matrix mit metallischen Nanopartikeln, wobei die Matrix aus den ursprünglich in den Funktionsschichten der Funktionsbeschichtung vorliegenden Substanzen gebildet ist. Die PET-Trägerfolie bleibt unversehrt.

Gemäß der DE 10 2005 025 982 A1 wird in ähnlicher Weise durch Laserstrahlung die Low-E-Funktionsbeschichtung einer Glastafel durch Laserstrahleinstrahlung so farblich verändert, dass eine Markierung erzeugt wird.

Aus der US 2003/0039765 A1 ist ebenfalls ein Verfahren zur Markierung von Glastafeln ohne Schutzschicht mittels Laser bekannt. Bei dem Verfahren wird in einem ersten Schritt ein Laserstrahl auf ein Markierungsmaterial gerichtet, um das Markierungsmaterial zu verdampfen und auf einen bestimmten Bereich des zu markierenden Substrats abzuscheiden. In einem zweiten Schritt wird mittels Laserstrahl das auf dem zu markierenden Substrat abgelagerte Material entsprechend der herzustellenden Markierung entfernt oder umgewandelt.

Die EP 3 031 785 A1 offenbart ein Verfahren zur Herstellung eines Glaskeramikelements mit strukturierter Beschichtung, wobei ein Glaskeramikelement mit einer im sichtbaren Spektralbereich zumindest teilweise lichtblockenden Beschichtung bereitgestellt wird, das Glaskeramikelement mit einem gepulsten Laserstrahl bestrahlt wird, so dass durch Ablation die Beschichtung entfernt wird, und nach dem Entfernen der Beschichtung die Glaskeramik mit dem gleichen Laser im Bereich der entfernten Beschichtung bestrahlt wird, so dass die Glaskeramik im bestrahlten Bereich optisch modifiziert wird.

Die DE 102 58 522 A1 offenbart ein Verfahren zum Markieren einer wärmedämmenden Verbundglasscheibe aus zwei Glasscheiben, zumindest einer zwischen den beiden Glasscheiben liegenden PVB-Folie und einer dünnen, im sichtbaren Wellenlängenbereich transparenten Metallschicht. Bei dem Verfahren wird die Metallschicht mit einem Laserstrahl beaufschlagt und aufgrund der Einwirkung des Laserstrahls verfärbt.

Aufgabe der vorliegenden Erfindung ist somit die Bereitstellung eines einfachen und kostengünstigen Markierungsverfahrens zum dauerhaften Markieren von mit einer Schutzbeschichtung, bevorzugt einer Schutzfolie oder einer Polymerschutzschicht, beschichteten Glastafeln, insbesondere von ESG-Glastafeln.

Diese Aufgabe wird durch ein Markierungsverfahren gemäß Anspruch 1 gelöst. Vorteilhafte Weiterbildungen der Erfindung werden in den sich anschließenden Unteransprüchen gekennzeichnet.

Im Rahmen der Erfindung wurde überraschenderweise herausgefunden, dass es möglich ist, mittels Laserstrahlung eine Markierung auf die, vorzugsweise mit Funktionsschichten versehenen, Glastafeln unterhalb der Schutzbeschichtung aufzubringen und in demselben Arbeitsgang bzw. gleichzeitig die Schutzbeschichtung zu entfernen.

Das Markieren erfolgt gemäß dem Verfahren gemäß der DE 10 2005 026 038 A1, wobei die Glastafel allerdings erfindungsgemäß eine Schutzbeschichtung aufweist.

Das heißt, gemäß dem erfindungsgemäßen Verfahren wird die Schutzbeschichtung mittels Laserstrahlung abgetragen, bevorzugt verbrannt bzw. weggebrannt, und im gleichen Arbeitsgang wird Markierungsmaterial von einem Spender- bzw. Trägermedium mittels der Laserstrahlung auf eine frei gelegte Oberfläche der Glastafel aufgedruckt, die sich zuvor unterhalb der Schutzbeschichtung der Glastafel befunden hat. Dabei wird das Markierungsmaterial bei Glastafeln mit Funktionsbeschichtung auf die nach außen weisende Funktionsbeschichtungsoberfläche und/oder auf die Glasoberfläche aufgebracht. Bei Glastafeln ohne Funktionsbeschichtung wird das Markierungsmaterial auf die unbeschichtete Glasoberfläche aufgebracht.

Bei einem vorteilhaften, jedoch nicht erfindungsgemäßen Verfahren erfolgt das Markieren gemäß der DE 10 2005 025 982 A1, wobei die Glastafel allerdings eine Schutzbeschichtung aufweist. Gemäß diesem Verfahren wird die Schutzbeschichtung mittels Laserstrahlung abgetragen, bevorzugt verbrannt bzw. weggebrannt, und im gleichen Arbeitsgang wird die sich zuvor darunter befindliche Funktionsbeschichtung farblich verändert, so dass aufgrund des Kontrasts zwischen den farblich veränderten Bereichen und den nicht veränderten Bereichen eine Markierung in der Funktionsbeschichtung selber erzeugt wird.

Im Folgenden wird die Erfindung anhand einer Zeichnung beispielhaft näher erläutert. Es zeigen:
- Figur 1:: Stark vereinfacht und schematisch einen Schnitt durch eine Glastafel mit Schutzschicht mit einer Markierungseinrichtung für das vorteilhafte, nicht erfindungsgemäße Markierungsverfahren
- Figur 2:: Stark vereinfacht und schematisch einen Schnitt durch eine Glastafel mit einer darunter angeordneten Markierungseinrichtung für das erfindungsgemäße Markierungsverfahren

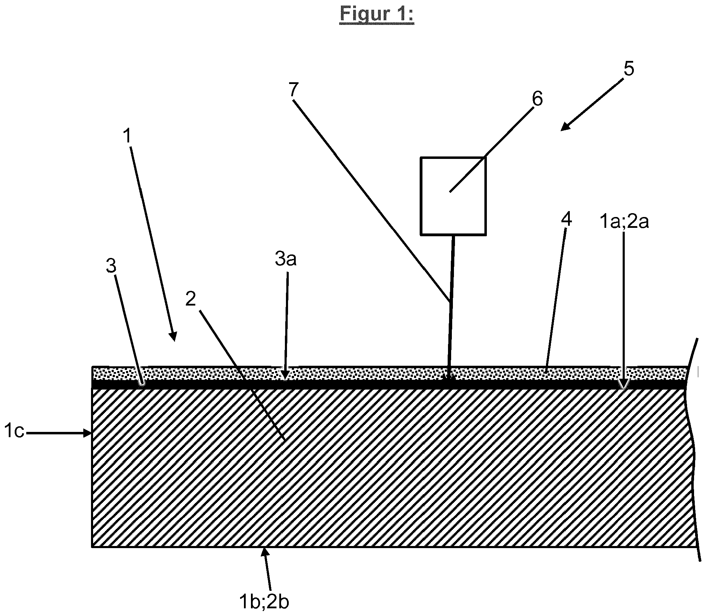

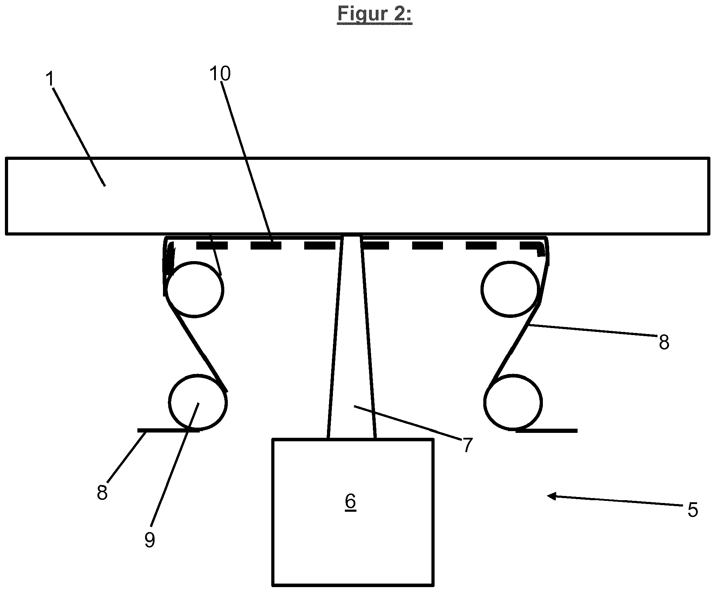

Eine erfindungsgemäß zu markierende Glastafel 1 (Fig. 1, 2) weist eine erste und zweite Glasoberfläche 1a;b sowie vorzugsweise eine umlaufende Glastafelkante 1c auf. Die Glastafel 1 weist vorzugsweise nur eine einzelne bzw. einzige Glasscheibe 2 (Fig. 1) auf. Jede Glasscheibe 2 weist zwei Glasscheibenoberflächen 2a;b auf. Weist die Glastafel 1 nur eine einzige Glasscheibe 2 auf, bilden die beiden Glasscheibenoberflächen 2a;b die Glasoberflächen 1a;b der Glastafel 1a;b. Besonders bevorzugt handelt es sich bei der Glastafel 1 um eine ESG-Glastafel mit einer einzigen noch vorzuspannenden bzw. bereits vorgespannten Glasscheibe 2.

Es kann sich bei der Glastafel 1 aber auch um eine Verbundglastafel aus mehreren miteinander verbundenen Glasscheiben 2 handeln (nicht dargestellt). Bei Verbundglastafeln handelt es sich um ein Laminat aus mindestens zwei einzelnen Glasscheiben 2, die jeweils mittels einer klebfähigen Zwischenschicht aus Kunststoff, insbesondere durch eine hochreißfeste, zähelastische, thermoplastische Folie, miteinander verbunden sind. In diesem Fall bilden jeweils die beiden außenliegenden Glasscheibenoberflächen 2a;b die Glasoberflächen 1a;b der Glastafel 1a;b. Bei den Glasscheiben 2 der Verbundglastafel handelt es sich vorzugsweise zumindest teilweise um vorgespannte Glasscheiben 2.

Zudem weist die Glastafel 1 an zumindest einer ihrer beiden Glasoberflächen 1a;b eine oberflächliche Funktionsbeschichtung 3 auf. Die Funktionsbeschichtung 3 weist eine der oder den Glasscheiben 2 abgewandte, äußere Funktionsbeschichtungsoberfläche 3a auf.

Die Funktionsbeschichtung 3 kann eine oder mehrere einzelne Funktionsschichten aufweisen. Bei mehreren Funktionsschichten handelt es sich somit um ein Funktionsschichtenlaminat. Die Funktionsschichten ändern bestimmte Eigenschaften der Glastafel 1 bzw. verleihen dieser bestimmte Funktionen. Die Funktionen können dabei z.B. Wärmeschutz, Sonnenschutz, oder Beheizung sein. Bevorzugt handelt es sich bei der Funktionsbeschichtung 3 um eine Wellenlängenselektive bzw. Low-E-Beschichtung. Die Funktionsbeschichtung 3 wird vor dem bestimmungsgemäßen Gebrauch der Glastafel 1 nicht entfernt, sondern ist auch beim bestimmungsgemäßen Gebrauch der Glastafel 1 noch vorhanden.

Die Funktionsbeschichtung 3 der Glastafel 1 weist zumindest eine metallhaltige Funktionsschicht auf. Vorzugsweise handelt es sich jeweils um eine Metall- oder eine, bevorzugt keramische, Metalloxidschicht. Die metallischen Funktionsschichten sind vorzugsweise in oxidische Funktionsschichten, z.B. aus einem Metalloxid, vorzugsweise aus Zinnoxid, eingebettet, wodurch sich Transmission und Haltbarkeit erhöhen.

Außerdem kann die Funktionsbeschichtung 3 eine Funktionsschicht aus, bevorzugt keramischem, Metalloxid, vorzugsweise aus Zinnoxid, aufweisen, die direkt mit der Glasoberfläche 1a;b verbunden ist, und die übrigen Schichten der Funktionsbeschichtung 3 mit der Glasoberfläche 1a;b verbindet. Die Funktionsschicht aus Metalloxid, vorzugsweise Zinnoxid, dient somit zugleich als Haftschicht.

Vorzugsweise weist eine metallhaltige, bevorzugt eine metallische Funktionsschicht Silber, Kupfer oder Gold auf. Eine Funktionsschicht aus Metalloxid besteht vorzugsweise aus Zinnoxid.

Selbstverständlich muss die keramische Funktionsschicht nicht aus Oxidkeramik bestehen. Es kann sich z.B. auch um eine nichtoxidische keramische Funktionsschicht handeln.

Die Funktionsbeschichtung 3 der Glastafel 1 weist somit zumindest eine metallische und/oder zumindest eine, bevorzugt metallhaltige, keramische Funktionsschicht auf.

Das Aufbringen der Funktionsschichten auf die Glasscheibe 2 erfolgt vorzugsweise durch Sputtern oder nasschemisch.

Des Weiteren weist die Funktionsbeschichtung 3 vorzugsweise eine Dicke von < 2 µm, bevorzugt < 1µm, auf.

Zudem weist die Glastafel 1 an zumindest einer ihrer beiden Glasoberflächen 1a;b eine Schutzbeschichtung 4 in Form einer Polymerschutzschicht oder einer abziehbaren Schutzfolie auf. Die Schutzbeschichtung 4 deckt die jeweilige Glasoberfläche 1a;b und die Funktionsbeschichtung 3 nach außen hin ab und schützt insbesondere die unter der Schutzbeschichtung 4 angeordnete Funktionsbeschichtung 3 oder, wenn keine Funktionsbeschichtung 3 vorhanden ist, die reine Glasoberfläche 1a;b, vor mechanischer Beschädigung. Die Schutzbeschichtung 4 bildet somit die äußere bzw. außenliegende Schicht der Glastafel 1.

Im Gegensatz zur Funktionsbeschichtung 3 wird die Schutzbeschichtung 4 vor der endgültigen Verwendung der Glastafel 1 vollständig entfernt. Sie ist somit nicht dauerhaft vorhanden. Die Schutzfolie wird abgezogen und die Polymerschutzschicht wird verbrannt. Die Funktionsbeschichtung 3 dagegen ist zumindest bereichsweise dauerhaft vorhanden.

Die Polymerschutzschicht besteht aus einem Polymer und ist nicht von der Glastafel 1 abziehbar. Die Polymerschutzschicht ist mit der jeweiligen Oberfläche (Funktionsbeschichtungsoberfläche 3a oder Glasoberfläche 1a;b) fest bzw. unlösbar bzw. nicht zerstörungsfrei verbunden.

Zudem weist die Polymerschutzschicht vorzugsweise eine Dicke von 1 µm bis 1 mm, bevorzugt 1 µm bis 100 µm, auf.

Die Schutzfolie besteht aus Kunststoff, vorzugsweise Polyvinylchlorid (PVC), und ist von der Glastafel 1 abziehbar.

Zudem weist die Schutzfolie vorzugsweise eine Dicke von 20 bis 100 µm auf.

Wie bereits erläutert wird erfindungsgemäß durch Aufdrucken von Markierungsmaterial mittels Laserstrahlung eine Markierung auf der Glastafel 1 erzeugt, wobei gleichzeitig die Schutzbeschichtung 4 im Bereich der Markierung mittels der Laserstrahlung abgetragen, vorzugsweise verbrannt wird.

Fig. 2 zeigt beispielhaft eine Markierungsvorrichtung 5 zur Durchführung des erfindungsgemäßen Markierungsverfahrens.

Fig. 1 zeigt beispielhaft eine Markierungsvorrichtung 5 zur Durchführung des vorteilhaften, jedoch nicht erfindungsgemäßen Markierungsverfahrens.

Die Markierungsvorrichtung 5 weist eine Laserstrahlerzeugungseinrichtung 6 zur Erzeugung eines Laserstrahls 7 auf. Zur Durchführung des erfindungsgemäßen Verfahrens weist die Markierungsvorrichtung 5 zudem ein Spender- bzw. Trägermedium 8, mehrere Führungsrollen 9 und einen Andruckrahmen 10 auf.

Die Laserstrahlerzeugungseinrichtung 6 dient zum Abtragen der Polymerschutzschicht bzw. der Schutzfolie im Bereich der zu erzeugenden Markierung und zur Erzeugung der Markierung im gleichen Arbeitsgang. Dazu erzeugt die Laserstrahlerzeugungseinrichtung 6 den Laserstrahl 7. Die Laserstrahlerzeugungseinrichtung 6 weist dazu eine Laserstrahlungsquelle und eine dazugehörige Optik auf. Mittels der Optik wird der Laserstrahl 7 fokussiert. Dabei kann der Laserstrahl 7 von einer Ausgangsposition, in der er vertikal bzw. senkrecht zur Glasoberfläche 1a;b ausgerichtet ist, verschwenkt bzw. ausgelenkt werden.

Die Laserstrahlungsquelle erzeugt dabei vorzugsweise einen Laserstrahl 7, dessen Wellenlänge bei 190 nm bis 12 µm, bevorzugt bei 500 nm bis 2 µm, liegt.

Zudem erzeugt die Laserstrahlungsquelle vorzugsweise einen Laserstrahl 7, dessen Laserleistung bei < 20 W, bevorzugt < 10 W, und/oder bei ≥ 0,5 W, bevorzugt bei ≥ 5 W, liegt.

Außerdem erzeugt die Laserstrahlungsquelle vorzugsweise einen gepulsten Laserstrahl 7. Sie kann aber auch einen kontinuierlichen Laserstrahl 7 erzeugen.

Bei dem Spender- bzw. Trägermedium 8 handelt es sich vorzugsweise um eine beschichtete Kunststofffolie, bevorzugt aus PET. Dabei ist das Trägermedium 8 vorzugsweise bandförmig.

Des Weiteren weist das Trägermedium 8 eine oberflächliche Markierungsbeschichtung aus Markierungsmaterial auf, welche zumindest eine metallhaltige, vorzugsweise metallische, Markierungsschicht und/oder zumindest eine keramische Markierungsschicht aufweist.

Vorzugsweise handelt es sich bei der metallhaltigen Markierungsschicht jeweils um eine Metall- oder eine, bevorzugt keramische, Metalloxidschicht. Die metallischen Markierungsschichten sind vorzugsweise in oxidische Funktionsschichten, z.B. aus einem Metalloxid, vorzugsweise aus Zinnoxid, eingebettet.

Außerdem kann die Markierungsbeschichtung eine Markierungsschicht aus, bevorzugt keramischem, Metalloxid, vorzugsweise aus Zinnoxid, aufweisen, die direkt mit der Oberfläche des Trägermediums 8 verbunden ist, und die übrigen Schichten der Markierungsbeschichtung mit der Oberfläche verbindet. Die Markierungsschicht aus Metalloxid, vorzugsweise Zinnoxid, dient somit zugleich als Haftschicht.

Vorzugsweise weist eine metallhaltige, bevorzugt eine metallische Markierungsschicht Silber, Kupfer oder Gold auf.

Selbstverständlich muss die keramische Markierungsschicht nicht aus Oxidkeramik bestehen. Es kann sich z.B. auch um eine nichtoxidische keramische Markierungsschicht handeln.

Die Markierungsbeschichtung der Glastafel 1 weist somit zumindest eine metallische und/oder zumindest eine, bevorzugt metallhaltige, keramische Markierungsschicht auf.

Das Aufbringen der Markierungsschichten auf das Trägermedium 8 erfolgt vorzugsweise durch Sputtern oder nasschemisch.

Bei der Markierungsbeschichtung handelt es sich zweckmäßigerweise um eine Low-E-Beschichtung.

Des Weiteren weist die Markierungsbeschichtung vorzugsweise eine Dicke von < 5 µm auf.

Der Andruckrahmen 10 dient zum Andrücken des bandförmigen Trägermediums 8 an die zu markierende Glastafel 1. Dabei ist der Andruckrahmen 10 vorzugsweise durchlässig für die Laserstrahlung. Alternativ dazu weist der Andruckrahmen 10 eine Öffnung auf, die den Markierungsbereich freigibt.

Das bandförmige Trägermedium 8 ist zudem um die Führungsrollen 9 herum geführt.

Zur Markierung wird nun das Trägermedium 8 mit seiner mit der Markierungsbeschichtung beschichteten Seite mittels des Andruckrahmens 10 an die Glastafel 1 angedrückt. Dann wird mittels des auf die Markierungsbeschichtung fokussierten Laserstrahls 7 Markierungsmaterial aus der Markierungsbeschichtung auf die Glastafel 1, insbesondere die Funktionsbeschichtungsoberfläche 3a und/oder die Glasoberfläche 1a;b übertragen und an dieser fixiert. Dadurch, dass die Laserstrahlung von dem Markierungsmaterial absorbiert wird, wird dieses von dem Trägermedium 8 gelöst und auf die zu markierende Oberfläche 1a;b;3a befördert.

Gleichzeitig bzw. in demselben Arbeitsgang wird dabei erfindungsgemäß die Schutzbeschichtung 4 mittels des Laserstrahls 7 abgetragen, insbesondere verbrannt, um die zu markierende Oberfläche 1a;b;3a frei zu legen.

Sowohl das Material des Andruckrahmens 10 als auch des Trägermediums 8 sind dabei bei der Laserwellenlänge des Laserstrahls 7 höchstens schwach absorbierend, so dass der Laserstrahl 7 durch Trägermedium 8 und den Andruckrahmen 10 hindurch geht.

Zum Markieren müssen die Glastafel 1 und der Laserstrahl 7 und gegebenenfalls das Trägermedium 8 relativ zueinander parallel zu den Glasoberflächen 1a;b bewegt werden. Vorzugsweise wird nur der Laserstrahl 7 bewegt. Die Bewegung des Laserstrahls 7 erfolgt dabei vorzugsweise mittels der Optik der Laserstrahlerzeugungseinrichtung 6. Die Optik der Lasererzeugungseinrichtung 6 ist nämlich vorzugsweise in der Lage, mit Hilfe von zwei verstellbaren Spiegeln (Scanoptik) den Laserstrahl 7 in einem Bereich von z.B. 100 mm x 100 mm (Scanfeld) zu bewegen. Nach der Markierung wird dann das bandförmige Trägermedium 8 nach vorne gerückt.

Das Markieren erfolgt somit durch Einbringen von Brennspuren bzw. Laserspuren in die Schutzbeschichtung 4 und Übertragen von Markierungsmaterial aus der Markierungsbeschichtung vom Trägermedium 8 auf die Glastafel 1, insbesondere auf die Funktionsbeschichtungsoberfläche 3a und/oder die Glasoberfläche 1a;b. Die Laserspuren können punktförmig, linienförmig oder flächig sein. Im Bereich der Laserspuren ist die Schutzbeschichtung 4 vollständig abgetragen, insbesondere verdampft bzw. verbrannt, und das Markierungsmaterial ist auf die dadurch frei gewordene bzw. frei gelegte Oberfläche 1a;b,3a aufgetragen.

Wie bereits erläutert, erfolgt das Markieren beim vorteilhaften, nicht erfindungsgemäßen Verfahren durch Einbringen von Brennspuren bzw. Laserspuren in die Schutzbeschichtung 4 und die Funktionsbeschichtung 3. Im Bereich der Laserspuren ist die Schutzbeschichtung 4 vollständig abgetragen, insbesondere verdampft bzw. verbrannt, und die Funktionsbeschichtung 3 ist verfärbt.

Ursache für die Entstehung der Verfärbungen ist unter anderem die Absorption der Laserstrahlung in der metallischen oder keramischen Funktionsschicht.

Diese wird durch die Absorption so stark erwärmt, dass es im bestrahlten Bereich zu einer Veränderung des Materials der Funktionsbeschichtung kommt. Als Folge der Veränderung liegt beispielsweise das Metall in Form von Nanopartikeln vor, eingebettet in eine Matrix, gebildet zumindest teilweise aus Material aus den anderen ursprünglich in der Funktionsbeschichtung 3 vorhandenen Funktionsschichten. Oder die chemische Struktur des Materials wird so geändert, dass es sich verfärbt.

Diese Mechanismen bzw. daraus resultierenden Verfärbungen treten in der Regel auch bei dem Markierungsmaterial der Markierungsbeschichtung des Trägermediums auf.

Vorteil der erfindungsgemäßen Verfahren ist, dass auch ESG-Glastafeln mit einer Schutzbeschichtung 4 dauerhaft markiert werden können. Die noch nicht vorgespannten Glastafeln 1 können markiert werden und die Markierung bleibt trotz Wegbrennens der Polymerbeschichtung bei der Wärmebehandlung erhalten. Dadurch können auch Prüfmarkierungen angebracht werden, welche durch einen Farbumschlag anzeigen, dass die notwendige Zeit für die Temperaturbehandlung erreicht ist.

Zudem können auch bereits vorgespannte ESG-Glastafeln mit Schutzfolie markiert werden.

Die erfindungsgemäß erzeugten Markierungen sind hochgradig beständig gegen Abrieb und Witterungseinflüsse sowie Temperaturen, Lösungsmittel oder sonstige Chemikalien. Es wird somit eine optimale Markierung über die gesamte Lebensdauer der Glastafel 1 gewährleistet.

Die Markierungsvorrichtung 5 zur Durchführung des erfindungsgemäßen Verfahrens kann problemlos in Schneid- und Brechlinien integriert werden oder als Einzelplatzsystem ausgebildet werden. Beispielsweise kann die Markierungsvorrichtung in die Schneidbrücke integriert werden.

Zudem kann mit den erfindungsgemäßen Verfahren eine vollautomatische Kennzeichnung mit maschinenlesbaren Codes (z.B. Data-Matrix-Codes), Logos und Produkt-IDs, Seriennummern, auftragsspezifischen Daten individuell für jede Glastafel durchgeführt werden.

Dabei war nicht ohne weiteres vorhersehbar, das die Aufbringung einer Markierung auf eine unterhalb der Schutzbeschichtung 4 liegende Oberfläche 1a;b;3a möglich ist. Die Laserstrahlung wird von der Markierungsbeschichtung, insbesondere von der oder den Markierungsschichten, absorbiert. Dadurch wird die Markierungsbeschichtung, insbesondere wird bzw. werden die Markierungsschicht(en), zumindest teilweise bzw. teilmengenweise von dem Trägermedium 8 abgesprengt. Es wird nun davon ausgegangen, dass die dabei frei werdende Energie überraschenderweise dazu führt, dass die Schutzbeschichtung 4 abgetragen wird und so die zu markierende Oberfläche frei gelegt wird. Es werden offenbar Temperaturen erreicht, die ähnlich dem Ofenprozess zur Verbrennung der Schutzbeschichtung führen. Das Markierungsmaterial bzw. das Material der Funktionsschichten kann hingegen nicht verbrennen, da es ein Metall oder eine Keramik ist.

Des Weiteren kann der Laserstrahl 7 auch durch die Glastafel 1 durch auf die Markierungsbeschichtung bzw. die Funktionsbeschichtung 3 gerichtet werden. Dies erleichtert die Integration der Laserkennzeichnung in den Arbeitsablauf bei der Ofenbeschickung.

### Ausführungsbeispiele:

Es wurde ein 1 µm-Laser auf die beschichtete Glasoberfläche einer mit einer Polymerschutzschicht versehenen ESG-Glastafel gerichtet. Die ESG-Glastafel wies zudem eine Low-E-Beschichtung mit einer Silberschicht auf. Die Laserleistung betrug 5 W. Die Frequenz des gepulsten Laserstrahls betrug 10 kHz. Der Strahldurchmesser im Fokus lag bei 100 µm.

Es wurde eine dauerhafte Markierung in der Low-E-Beschichtung erzeugt und die Polymerschutzschicht im Bereich der Markierung entfernt.

Mit demselben Laser wurde auch eine Markierung auf die Glastafel mittels eines Markierungsbandes aufgebracht. Das Markierungsband wurde dazu an die Polymerschutzschicht angedrückt. Das Markierungsband wies ebenfalls eine Low-E-Beschichtung auf. Der Laser wurde ebenfalls auf die beschichtete Glasoberfläche fokussiert.

Es wurde ebenfalls eine dauerhafte Markierung auf der Glastafel erzeugt und die Polymerschutzschicht im Bereich der Markierung entfernt.

## Patentansprüche

1. Markierungsverfahren zur Markierung von Glastafeln (1), die zumindest an einer ihrer beiden Glasoberflächen (1a;b) eine Schutzbeschichtung (4) in Form einer Polymerbeschichtung oder in Form einer abziehbaren Schutzfolie aus Kunststoff, und vorzugsweise eine unter der Schutzbeschichtung (4) angeordnete Funktionsbeschichtung (3) mit mindestens einer metallhaltigen und/oder mindestens einer keramischen Funktionsschicht aufweisen,
**gekennzeichnet durch folgende Verfahrensschritte:**
a) Bereitstellung eines Trägermediums (8), bevorzugt einer, insbesondere bandförmigen, Trägerfolie, das eine oberflächliche Markierungsbeschichtung aus Markierungsmaterial mit mindestens einer metallhaltigen und/oder mindestens einer keramischen Markierungsschicht aufweist,
b) Abtragen, insbesondere Verbrennen, der Schutzbeschichtung (4) im Bereich der aufzubringenden Markierung und im gleichen Arbeitsgang Übertragen von Markierungsmaterial der Markierungsbeschichtung des Trägermediums (8) in Form der aufzubringenden Markierung auf die durch das Abtragen der Schutzbeschichtung (4) frei gelegte Oberfläche (1a;b;3a) mittels Laserstrahlung, wobei die Laserstrahlung von der Markierungsbeschichtung absorbiert wird, wodurch die Markierungsbeschichtung zumindest teilweise von dem Trägermedium (8) abgesprengt wird und wobei die dabei frei werdende Energie dazu führt, dass die Schutzbeschichtung (4) abgetragen wird und so die zu markierende Oberfläche frei gelegt wird, wobei das Trägermedium (8) während der Laserbestrahlung an der Glastafel (1) anliegt und während der Laserbestrahlung die mit der Markierungsbeschichtung beschichtete Seite des Trägermedium (8) der Glastafel (1) zugewandt ist.

2. Markierungsverfahren nach einem der vorhergehenden Ansprüche, **dadurch gekennzeichnet, dass** ein Laserstrahl (7)
a) mit einer Wellenlänge von 190 nm bis 12 µm, bevorzugt von 500 nm bis 2 µm,
und/oder
b) mit einer Laserleistung < 20 W, bevorzugt mit einer Laserleistung < 10 W,
und/oder
c) mit einer Laserleistung von ≥ 0,5 W, bevorzugt mit einer Laserleistung von ≥ 5 W,
verwendet wird.

3. Markierungsverfahren nach einem der vorhergehenden Ansprüche,
**dadurch gekennzeichnet, dass**
ein gepulster Laserstrahl (7) oder ein kontinuierlicher Laserstrahl (7) verwendet wird.

4. Markierungsverfahren nach einem der vorhergehenden Ansprüche,
**dadurch gekennzeichnet, dass**
noch nicht vorgespannte Einscheiben-Sicherheitsglastafeln markiert werden.

5. Markierungsverfahren nach einem der vorhergehenden Ansprüche,
**dadurch gekennzeichnet, dass**
a) die Funktionsschicht eine Metallschicht oder eine, bevorzugt keramische, Metalloxidschicht ist,
und/oder
b) es sich bei der Funktionsbeschichtung (3) um eine Low-E-Beschichtung handelt.

6. Markierungsverfahren nach einem der vorhergehenden Ansprüche,
**dadurch gekennzeichnet, dass**
die Polymerschutzschicht aus einem Polymer besteht und nicht von der Glastafel (1) abziehbar ist und/oder dass die Polymerschutzschicht eine Dicke von 1 µm bis 1 mm, bevorzugt 1 µm bis 100 µm, aufweist.

7. Markierungsverfahren nach einem der vorhergehenden Ansprüche,
**dadurch gekennzeichnet, dass**
die Schutzfolie aus Kunststoff, vorzugsweise Polyvinylchlorid (PVC), besteht und von der Glastafel (1) abziehbar ist und/oder dass die Schutzfolie eine Dicke von 20 bis 100 µm aufweist.

8. Markierungsverfahren nach einem der vorhergehenden Ansprüche,
**dadurch gekennzeichnet, dass**
die Laserstrahlung durch die Glastafel (1) durch oder nicht durch die Glastafel (1) durch gestrahlt wird.

9. Markierungsverfahren nach einem der vorhergehenden Ansprüche,
**dadurch gekennzeichnet, dass**
ein fokussierter Laserstrahl (7) verwendet wird,
wobei der Laserstrahl (7) vorzugsweise auf die beschichtete Glasoberfläche (1a) fokussiert wird.

10. Markierungsverfahren nach einem der vorhergehenden Ansprüche,
**dadurch gekennzeichnet, dass**
das Markierungsmaterial auf eine nach außen weisende Funktionsbeschichtungsoberfläche (3a) der Funktionsbeschichtung (3) und/oder auf die Glasoberfläche (1a;b) aufgebracht wird.

11. Markierungsverfahren nach einem der vorhergehenden Ansprüche,
**dadurch gekennzeichnet, dass**
a) die metallhaltige Markierungsschicht eine Metallschicht oder eine, bevorzugt keramische, Metalloxidschicht ist,
und/oder
b) es sich bei der Markierungsbeschichtung um eine Low-E-Beschichtung handelt.

12. Markierungsverfahren nach einem der vorhergehenden Ansprüche,
**dadurch gekennzeichnet, dass**
die Laserstrahlung von der Markierungsbeschichtung derart absorbiert wird, dass das Markierungsmaterial von dem Trägermedium (8) abgesprengt wird und auf die zu markierende Oberfläche (1a;b;3a) befördert wird,
wobei vorzugsweise durch die bei der Absprengung frei werdende Energie die Schutzbeschichtung (4) abgetragen wird.

## Claims

1. A marking method for marking glass sheets (1) that comprise at least on one of their two glass surfaces (1a;b) a protective coating (4) in the form of a polymer coating or in the form of a peel-off protective film of plastic, and preferably comprise a functional coating (3), situated under the protective coating (4), having at least one metal-containing and/or at least one ceramic functional layer,
**characterized by the following method steps:**
a) provision of a carrier medium (8), preferably an, in particular strip-shaped, carrier film, that has a superficial marking coating made of marking material having at least one metal-containing and/or at least one ceramic marking layer,
b) removal, in particular burning, of the protective coating (4) in the region of the marking to be applied and, in the same working step, transferring of marking material of the marking coating of the carrier medium (8), in the form of the marking to be applied, onto the surface (1a;b;3a) exposed by the removal of the protective coating (4), using laser radiation, wherein the laser radiation is absorbed by the marking coating, whereby the marking coating is dislodged at least partly from the carrier medium (8), and wherein the energy thereby released has the result that the protective coating (4) is removed, thus exposing the surface to be marked, wherein the carrier medium (8) lies on the glass sheet (1) during the laser irradiation and, during the laser irradiation, the side of the carrier medium (8) coated with the marking coating is oriented toward the glass sheet (1).

2. The marking method according to one of the preceding claims,
**characterized in that**
a laser beam (7)
a) having a wavelength of from 190 nm to 12 µm, preferably 500 nm to 2 µm, and/or
b) having a laser power < 20 W, preferably having a laser power < 10 W, and/or
c) having a laser power ≥ 0.5 W, preferably having a laser power ≥ 5 W, is used.

3. The marking method according to one of the preceding claims,
**characterized in that**
a pulsed laser beam (7) or a continuous laser beam (7) is used.

4. The marking method according to one of the preceding claims,
**characterized in that**
not yet pre-stressed single-pane safety glass sheets are marked.

5. The marking method according to one of the preceding claims,
**characterized in that**
a) the functional layer is a metallic layer or a, preferably ceramic, metal oxide layer,
and/or
b) the functional coating (3) is a low-E coating.

6. The marking method according to one of the preceding claims,
**characterized in that**
the polymer protective layer is made of a polymer and cannot be peeled off from the glass sheet (1), and/or **in that** the polymer protective layer has a thickness of 1 µm to 1 mm, preferably 1 µm to 100 µm.

7. The marking method according to one of the preceding claims,
**characterized in that**
the protective film is made of plastic, preferably of polyvinyl chloride (PVC), and can be peeled off from the glass sheet (1), and/or the protective film has a thickness from 20 to 100 µm.

8. The marking method according to one of the preceding claims,
**characterized in that**
the laser radiation is radiated through the glass sheet (1) or is not radiated through the glass sheet (1).

9. The marking method according to one of the preceding claims,
**characterized in that**
a focused laser beam (7) is used,
wherein the laser beam (7) is preferably focused onto the coated glass surface (1a).

10. The marking method according to one of the preceding claims,
**characterized in that**
the marking material is applied onto an outward-facing functional coating surface (3a) of the functional coating (3) and/or onto the glass surface (1a;b).

11. The marking method according to one of the preceding claims,
**characterized in that**
a) the metal-containing marking layer is a metallic layer or a, preferably ceramic, metal oxide layer,
and/or
b) the marking coating is a low-E coating.

12. The marking method according to one of the preceding claims,
**characterized in that**
the laser radiation is absorbed by the marking coating in such a way that the marking material is dislodged from the carrier medium (8) and is conveyed onto the surface (1a;b;3a) that is to be marked,
wherein preferably the protective coating (4) is removed by the energy released during the dislodging.

## Revendications

1. Procédé de marquage pour le marquage de panneaux de verre (1) qui comprennent, au moins sur l'une de leurs deux surfaces de verre (1a;b), un revêtement de protection (4) sous la forme d'un revêtement polymère ou sous la forme d'un film de protection pelable en matière plastique, et de préférence un revêtement fonctionnel (3) disposé sous le revêtement de protection (4) et comportant au moins une couche fonctionnelle contenant du métal et/ou au moins une couche fonctionnelle céramique, **caractérisé par les étapes de procédé suivantes** :
a) Mise à disposition d'un milieu de support (8), de préférence d'un film de support, en particulier en forme de bande, qui comprend un revêtement de marquage superficiel en matériau de marquage avec au moins une couche de marquage contenant du métal et/ou au moins une couche de marquage en céramique,
b) Enlèvement, en particulier brûlage, du revêtement de protection (4) dans la zone du marquage à appliquer et, dans la même opération, transfert du matériau de marquage du revêtement de marquage du milieu de support (8) sous la forme du marquage à appliquer sur la surface (1a;b;3a), mise à nu à cause d l'enlèvement du revêtement de protection, au moyen d'un rayonnement laser, le rayonnement laser étant absorbé par le revêtement de marquage, ce qui a pour effet de faire éclater au moins partiellement le revêtement de marquage du milieu de support (8), et l'énergie ainsi libérée ayant pour conséquence que le revêtement de protection (4) est enlevé et que la surface à marquer est ainsi mise à nu, le milieu de support (8) étant appliqué contre le panneau de verre (1) pendant l'irradiation laser et le côté du milieu de support (8) revêtu du revêtement de marquage étant tourné vers le panneau de verre (1) pendant l'irradiation laser.

2. Procédé de marquage selon l'une quelconque des revendications précédentes,
**caractérisé en ce que**
un rayon laser (7)
a) avec une longueur d'onde de 190 nm à 12 µm, de préférence de 500 nm à 2 µm,
et/ou
b) avec une puissance laser < 20 W, de préférence avec une puissance laser < 10 W,
et/ou
c) avec une puissance laser de ≥ 0,5 W, de préférence avec une puissance laser de ≥ 5 W,
est utilisé.

3. Procédé de marquage selon l'une quelconque des revendications précédentes,
**caractérisé en ce que**
un rayon laser (7) pulsé ou un rayon laser (7) continu est utilisé.

4. Procédé de marquage selon l'une quelconque des revendications précédentes,
**caractérisé en ce que**
des panneaux de verre trempé de sécurité non encore trempés sont marqués.

5. Procédé de marquage selon l'une quelconque des revendications précédentes,
**caractérisé en ce que**
a) la couche fonctionnelle est une couche métallique ou une couche d'oxyde métallique, de préférence céramique,
et/ou
b) il s'agit, pour le revêtement fonctionnel (3), d'un revêtement Low E.

6. Procédé de marquage selon l'une quelconque des revendications précédentes,
**caractérisé en ce que**
le revêtement de protection polymère est constitué d'un polymère et ne peut pas être retiré du panneau de verre (1) et/ou **en ce que** le revêtement de protection polymère comprend une épaisseur de 1 µm à 1 mm, de préférence de 1 µm à 100 µm.

7. Procédé de marquage selon l'une quelconque des revendications précédentes,
**caractérisé en ce que**
le film de protection est en matière plastique, de préférence en chlorure de polyvinyle (PVC), et peut être retiré du panneau de verre (1) et/ou **en ce que** le film de protection comprend une épaisseur de 20 à 100 µm.

8. Procédé de marquage selon l'une quelconque des revendications précédentes,
**caractérisé en ce que**
le rayonnement laser est émis à travers le panneau en verre (1) ou ne l'est pas.

9. Procédé de marquage selon l'une quelconque des revendications précédentes,
**caractérisé en ce que**
un rayon laser focalisé (7) est utilisé,
le rayon laser (7) étant de préférence focalisé sur la surface de verre (1a) revêtue.

10. Procédé de marquage selon l'une quelconque des revendications précédentes,
**caractérisé en ce que**
le matériau de marquage est appliqué sur une surface de revêtement fonctionnel (3a), orientée vers l'extérieur, du revêtement fonctionnel (3) et/ou sur la surface de verre (1a;b).

11. Procédé de marquage selon l'une quelconque des revendications précédentes,
**caractérisé en ce que**
a) la couche de marquage contenant du métal est une couche métallique ou une couche d'oxyde métallique, de préférence céramique, et/ou
b) le revêtement de marquage est un revêtement Low E.

12. Procédé de marquage selon l'une quelconque des revendications précédentes,
**caractérisé en ce que**
le rayonnement laser est absorbé par le revêtement de marquage de telle sorte que le matériau de marquage est éjecté du milieu de support (8) et est transporté sur la surface à marquer (1a;b;3a),
le revêtement de protection (4) étant de préférence enlevé par l'énergie libérée lors de l'éclatement.
